# DEMANDE DE BREVET EUROPEEN

(11) **EP 1 566 686 A1**
(43) Date de publication de la demande: **24.08.2005**
(21) Numéro de dépôt: 04003854.9
(22) Date de dépôt: 20.02.2004
(51) Int. Cl.: G02F 1/13357, G02B 6/00, G04G 1/00

(54) **Dispositif de rétro-éclairage pour élément d'affichage**

(71) Demandeur: ETA SA Manufacture Horlogère Suisse, 2540 Grenchen (CH)
(72) Inventeur: Henriet, Fabien, CH-2852 Courtételle (CH); Klopfenstein, Francois, CH-2800 Delémont (CH)
(74) Mandataire: Laurent, Jean

(57) **Abrégé**

Le dispositif de rétro-éclairage (1) permet d'illuminer par l'arrière un élément d'affichage d'information d'un objet portable, tel qu'une montre-bracelet. Ce dispositif comprend une plaque guide de lumière (7) ayant une face avant et une face arrière, un réflecteur de lumière (6) placé sur la face arrière de la plaque guide de lumière, un film diffuseur de lumière (9) et un film redresseur (11) placés sur la face avant de la plaque guide de lumière, et une source de lumière visible (2). Cette source de lumière, telle qu'une diode électroluminescente (2), fournit en bordure de la plaque guide de lumière des rayons lumineux, qui se propagent dans la plaque guide de lumière entre ses deux faces. Une couche, tel que le film diffuseur, comprend une zone (10') à opacité décroissante à partir d'une limite (25) située à proximité de la bordure de la plaque guide de lumière recevant les rayons lumineux de la source de lumière, afin d'atténuer l'intensité de la lumière à travers ladite zone. Cette zone à opacité décroissante est par exemple une teinture en dégradé de couleur blanche ou noire déposée sur le film diffuseur.

## Description

La présente invention concerne un dispositif de rétro-éclairage d'un élément d'affichage d'information d'un objet portable, tel qu'une montre-bracelet. Le dispositif de rétro-éclairage comprend une plaque guide de lumière ayant une face avant et une face arrière, un réflecteur de lumière placé sur la face arrière de la plaque guide de lumière, et une source de lumière visible. Cette source de lumière visible fournit en bordure de la plaque guide de lumière des rayons lumineux. Ces rayons lumineux se propagent dans la plaque guide de lumière entre ses deux faces afin d'être aiguillés pour illuminer l'écran d'affichage placé au-dessus de la face avant de la plaque guide de lumière.

Pour un objet, tel qu'une montre-bracelet, on entendra, par élément d'affichage, un cadran de montre, sur lequel des aiguilles indiquent l'heure, un écran d'affichage du type à cristaux liquides où des informations horaires ou textuelles ou imagées peuvent être affichées, ou une combinaison du cadran et de l'écran.

Des dispositifs d'illumination par l'arrière, qui sont dénommés dispositifs de rétro-éclairage, pour des écrans d'affichage notamment du type à cristaux liquides ont déjà été décrits dans l'art antérieur. On rencontre principalement de tels dispositifs dans des objets tels que des téléphones mobiles sans fil, des ordinateurs portables ou d'autres types d'objets portables d'usage courant.

Pour ces objets de relativement grande dimension, il est généralement facile d'illuminer par l'arrière de manière homogène un élément d'affichage sur toute sa surface visible. Pour ce faire, l'illumination par l'arrière est réalisée par une ou plusieurs sources de lumière disposées en regard de tranches d'une plaque guide de lumière. Ces sources de lumière fournissent des rayons lumineux dans la plaque guide de lumière afin que la lumière soit dirigée vers l'élément d'affichage. Avec plusieurs sources de lumière décalées d'une distance relativement importante par rapport à la partie visible de l'élément d'affichage, l'élément d'affichage peut être illuminé d'une manière relativement uniforme.

Dans le cas d'une montre-bracelet, il est difficile de prévoir plusieurs sources de lumière pour illuminer par l'arrière l'élément d'affichage étant donné que la place à disposition à l'intérieur du boîtier est restreinte. Comme le nombre de composants à monter dans ledit boîtier doit être réduit afin de remplir toutes les fonctions désirées de la montre, une seule source de lumière est généralement prévue pour assurer l'illumination de l'élément d'affichage.

Pour un dispositif de rétro-éclairage traditionnel, cette source de lumière est montée dans le boîtier de la montre en dessous de l'élément d'affichage dans une position proche de la partie visible de l'élément d'affichage. Même si la source de lumière est partiellement cachée en dessous de l'élément d'affichage, son rayonnement de lumière provoque un halo autour de la position de la source de lumière qui est visible de l'extérieur à travers l'élément d'affichage.

L'illumination par l'arrière de l'élément d'affichage n'est donc pas homogène étant donné que l'intensité de lumière de ce halo est plus importante que l'intensité de lumière illuminant le reste de l'élément d'affichage. Ceci est un inconvénient majeur d'un tel dispositif de rétro-éclairage s'il est prévu par exemple pour équiper une montre de haut de gamme.

L'invention a donc pour but principal de pallier les inconvénients cités ci-dessus en fournissant un dispositif de rétro-éclairage d'un élément d'affichage d'information d'un objet portable qui permette de rendre uniforme l'illumination de l'élément d'affichage notamment dans une zone située autour de la source de lumière.

A cet effet l'invention concerne un dispositif de rétro-éclairage d'un élément d'affichage d'information d'un objet portable, tel qu'une montre-bracelet cité ci-devant qui se caractérise en ce qu'il comprend une couche placée entre la face avant de la plaque guide de lumière et une face arrière de l'élément d'affichage de l'objet portable, cette couche ayant au moins une zone à opacité partielle décroissante à partir d'une limite située à proximité de l'endroit de la bordure de la plaque guide de lumière recevant les rayons lumineux de la source de lumière, afin d'atténuer l'intensité de la lumière traversant ladite zone.

Un avantage du dispositif de rétro-éclairage, selon l'invention, réside dans le fait que le halo provoqué par une source de lumière située en dessous et à proximité de la partie visible de l'élément d'affichage est atténué par la zone à opacité décroissante. De cette manière, il est possible d'illuminer grâce à cette zone à opacité décroissante de manière homogène l'élément d'affichage de l'objet portable qui peut dépendre également de l'angle de vision de l'élément d'affichage. Une seule source de lumière peut ainsi suffire pour l'illumination de l'élément d'affichage. Cette source de lumière peut être une diode électroluminescente qui est montée sur une plaque à circuit imprimé et est placée dans un compartiment ouvert vers le haut d'une entretoise montée sur la plaque à circuit imprimé.

Bien entendu comme l'intensité de lumière de ce halo décroît en s'éloignant de la source de lumière jusqu'à une distance déterminée de ladite source, l'opacité partielle de la zone de la couche doit également décroître en s'éloignant de ladite source. Cette décroissance de l'opacité de la zone, qui s'étend jusqu'à une distance déterminée sur la couche, peut être non linéaire étant donné que la décroissance de l'intensité du halo en fonction de la distance est également non linéaire.

De préférence, la zone à opacité partielle est obtenue par une teinture déposée ou intégrée dans la couche, ou par un offset, ou par un revêtement métallique semi-transparent d'épaisseur variable, ou par un revêtement métallique percé d'une multitude de trous ou constitué de points métalliques de diamètre et espacement variables en fonction de la résolution de l'oeil humain. La teinture utilisée peut être un dégradé de couleur noire ou blanche ou argentée. Cette teinture est par exemple de l'encre déposée par une machine d'impression. La couleur blanche peut être utilisée avantageusement dans le cas où la couche à zone à opacité partielle fait partie intégrante de la face avant de la plaque guide de lumière pour une réflexion diffuse d'une partie de la lumière à redistribuer dans la plaque guide de lumière.

La couche à zone à opacité partielle peut également être un film diffuseur ou un film redresseur de la lumière placé sur la face avant de la plaque guide de lumière.

Avantageusement, la plaque guide de lumière comprend à sa périphérie un coin arrondi recouvert par une couche de réflexion de la lumière, qui peut être une peinture blanche entièrement opaque ou un revêtement métallique. La diode électroluminescente est ainsi disposée sous le coin arrondi afin de fournir des rayons lumineux dans une direction verticale. De cette façon, les rayons sont réfléchis par la couche de réflexion en bordure de la plaque guide de lumière pour se propager dans la plaque guide de lumière entre les faces avant et arrière.

Un joint en matériau silicone peut relier également la partie supérieure de la diode électroluminescente à une surface inférieure du coin arrondi de la plaque à circuit imprimé afin de limiter les pertes optiques. Ce joint est choisi pour avoir un indice de réfraction intermédiaire entre l'indice de réfraction du matériau transparent de la diode électroluminescente et l'indice de réfraction de la plaque guide de lumière.

Les buts, avantages et caractéristiques du dispositif de rétro-éclairage d'un élément d'affichage d'information d'un objet portable apparaîtront mieux dans la description suivante d'au moins un mode de réalisation de l'invention en liaison avec les dessins dans lesquels :
- la figure 1 représente une vue tridimensionnelle en éclaté du dispositif de rétro-éclairage selon l'invention,
- les figures 2a et 2b représentent une vue de dessus et une vue tridimensionnelle du dispositif de rétro-éclairage selon l'invention avec tous les éléments assemblés,
- la figure 3 représente une vue de dessus du film diffuseur du dispositif de rétro-éclairage selon l'invention,
- la figure 4 représente une vue en coupe schématique partielle d'un premier mode de réalisation du dispositif de rétro-éclairage selon l'invention au niveau de la source lumineuse,
- la figure 5 représente une vue en coupe schématique partielle d'un second mode de réalisation du dispositif de rétro-éclairage selon l'invention au niveau de la source lumineuse, et
- la figure 6 représente de manière simplifiée un graphique de l'intensité lumineuse de la lumière sortant du dispositif de rétro-éclairage sans atténuation et avec atténuation de l'intensité en fonction de la distance à la source de lumière.

Dans la description suivante, tous les éléments du dispositif de rétro-éclairage qui sont bien connus d'un homme du métier dans ce domaine technique, ne seront pas expliqués en détail. Le mode de réalisation décrit concerne spécifiquement un dispositif de rétro-éclairage d'un élément d'affichage d'information d'une montre-bracelet. Cet élément d'affichage peut être un écran à cristaux liquides du type transflectif ou un cadran de montre ayant des parties transparentes à la lumière visible.

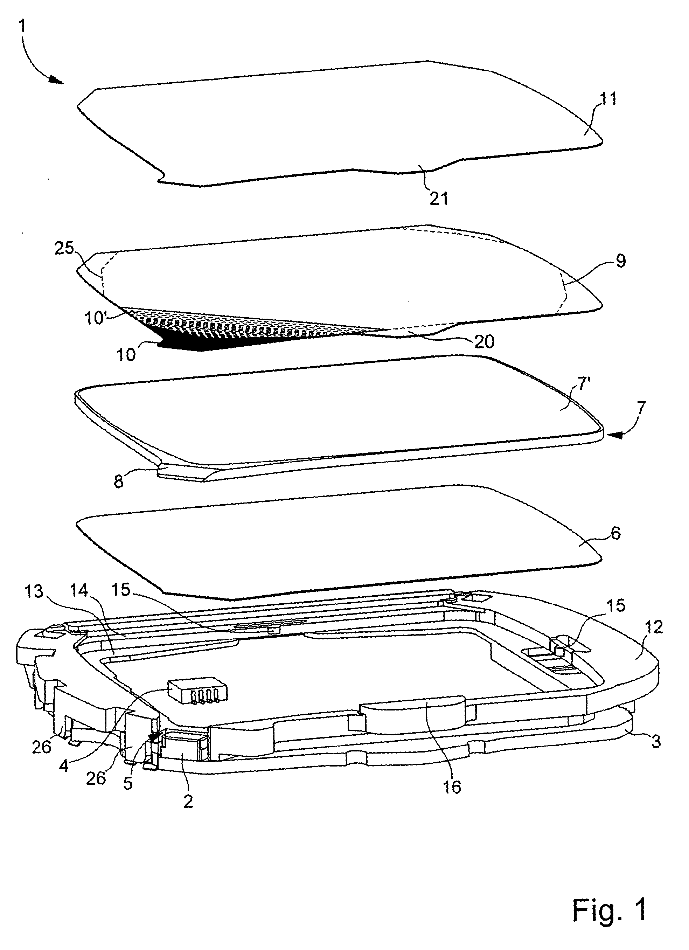

La figure 1 représente une vue tridimensionnelle en éclaté d'une forme d'exécution du dispositif de rétro-éclairage 1 équipant une montre bracelet. Dans cette forme d'exécution, le dispositif de rétro-éclairage 1 d'un élément d'affichage d'information non représenté comprend tout d'abord une plaque à circuit imprimé 3 sur laquelle sont fixés une source de lumière, telle qu'une diode électroluminescente 2 à éclairage vertical, et au moins un composant électronique 4. La diode électroluminescente est alimentée par une source d'énergie non représentée, telle qu'une pile ou un accumulateur, qui est électriquement reliée à la plaque à circuit imprimé 3.

Une entretoise 12 en forme de cadre en matériau plastique de préférence de couleur noire, voire blanche, est montée de manière amovible sur la plaque à circuit imprimé. Cette entretoise est positionnée grâce à des moyens d'assemblage constitués par des pieds 26 en contact avec la tranche de la plaque à circuit imprimé 3. Un compartiment 5 sur la partie extérieure de l'entretoise est prévu pour loger la diode électroluminescente. Ce compartiment comprend un certain nombre de parois verticales entourant partiellement ladite diode 2.

Bien entendu, ce compartiment pourrait être prévu également avec des parois verticales entourant complètement la diode électroluminescente pour lui permettre de ne fournir des rayons lumineux que dans une direction verticale. Un cadre opaque non représenté pourrait encore être inséré entre les parois du compartiment et la diode électroluminescente.

Le dispositif de rétro-éclairage 1 d'un élément d'affichage comprend encore une plaque guide de lumière 7, un réflecteur de lumière 6 du type diffus ou miroir monté sur la face arrière de la plaque guide de lumière, et une couche ayant une zone à opacité partielle 10' disposée entre la face avant de la plaque guide de lumière et l'élément d'affichage. Une structure à lentilles 7', qui peuvent être par exemple de taille nanométrique ou autre, est réalisée sur une partie de la face avant de la plaque guide de lumière 7. Cette structure à lentilles pourrait également être réalisée sur une partie de la face arrière de la plaque guide de lumière 7.

La plaque guide de lumière 7 comprend également un coin arrondi 8 qui est revêtu d'une peinture blanche opaque ou d'un revêtement métallique. La diode électroluminescente 2 dans son compartiment 5 est disposée juste en dessous du coin arrondi en bordure de la plaque guide de lumière. La diode électroluminescente fournit des rayons lumineux dans une direction verticale en direction du coin arrondi afin que ces rayons soient réfléchis de manière diffuse par la peinture blanche ou comme dans un miroir par le revêtement métallique. Après réflexion dans le coin arrondi, les rayons lumineux se propagent entre les faces avant et arrière de la plaque guide de lumière afin d'être réfléchis par le réflecteur et déviés par la structure de lentilles nanométriques.

La plaque guide de lumière 7 avec sa structure à lentilles nanométriques peut être réalisée en PC (poly-carbonate) ou en PMMA (poly-méthyle méthacrylate).

Dans cette forme d'exécution, la couche à zone à opacité partielle est un film flexible diffuseur de lumière 9 sur lequel peut être monté un film flexible redresseur de lumière 11. Ce film flexible redresseur de lumière 11 peut être un film T-BEF 90/24 fabriqué par l'entreprise 3M. Ce film redresseur est composé de micro-prismes sur sa face avant ou arrière pour redresser et orienter la lumière vers l'élément d'affichage. De préférence, des lignes de micro-prismes peuvent être disposées perpendiculairement par rapport à l'axe de propagation de la lumière dans la plaque guide de lumière pour mieux redresser la lumière et maximiser son intensité. Deux films redresseurs à lignes de prismes croisées pourraient également être utilisés pour maximiser l'intensité de la lumière dans un angle de vision prédéfini de l'élément d'affichage.

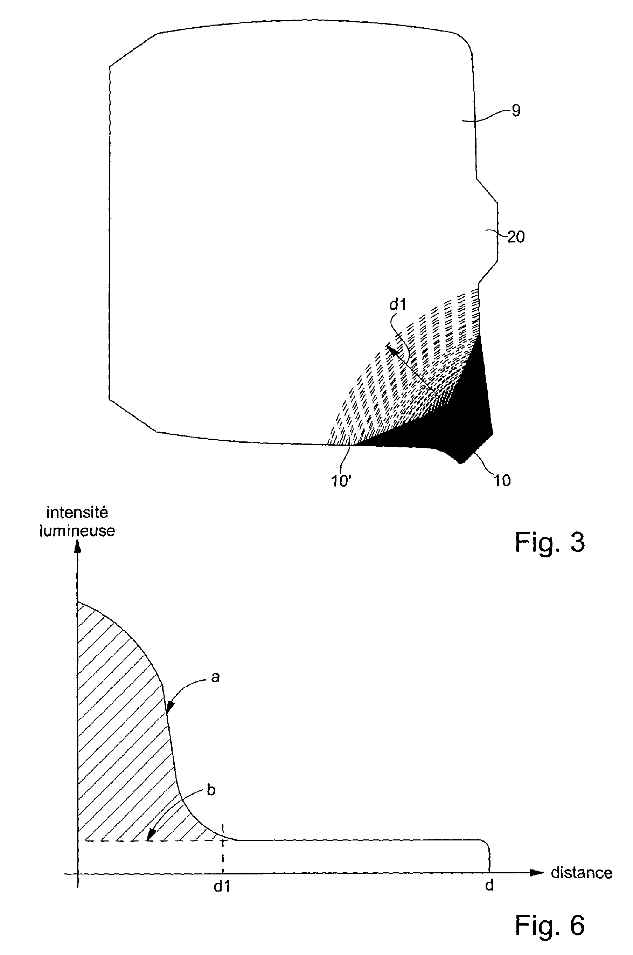

La zone à opacité partielle s'étend sur le film diffuseur 9 depuis une limite 25 qui représente une ligne de bordure de la partie visible de l'élément d'affichage jusqu'à une distance déterminée d1 de la source de lumière comme on peut mieux le voir en référence à la figure 3. Cette distance d1 peut dépendre d'un angle de vision naturel de l'élément d'affichage qui n'est pas forcément perpendiculaire à l'élément d'affichage dans le cas d'une montre-bracelet.

Il est à noter que la partie visible de l'élément d'affichage est définie par un réhaut opaque de support du verre de montre non représenté, qui maintient l'élément d'affichage.

L'intensité lumineuse du halo, qui est provoqué par la source de lumière et est visible de l'extérieur de l'élément d'affichage, décroît de manière non linéaire depuis la limite 25 jusqu'à une distance d1 à partir de laquelle l'intensité de lumière est sensiblement uniforme. De ce fait, l'opacité de la zone doit donc décroître de manière non linéaire comme l'intensité lumineuse du halo depuis la limite 25 jusqu'à la distance d1 de la source de lumière afin d'assurer une illumination uniforme de tout l'élément d'affichage. L'opacité partielle de la zone peut être d'environ 80% depuis la limite 25 jusqu'à 0% à la distance d1.

A la figure 6, il est représenté de manière simplifiée l'intensité lumineuse à travers l'élément d'affichage en fonction de la distance par rapport à la position de la source de lumière. On constate que l'intensité lumineuse du halo décroît de manière non linéaire jusqu'à une distance d1 à partir de laquelle on peut considérer que l'intensité de la lumière est plus ou moins constante. Sans couche à zone à opacité partielle, l'intensité de lumière à travers l'élément d'affichage est représentée par la courbe a. Avec ladite couche, l'intensité de lumière est représentée uniforme par la courbe b atténuée par ladite zone à opacité comme montrée par la partie hachurée. De ce fait, l'opacité en chaque point de la zone doit correspondre au niveau de l'intensité représentée à la courbe a.

La zone à opacité partielle 10', montrée de manière simplifiée aux figures 1 et 3 sur le film diffuseur 9, peut être obtenue par une teinture déposée ou intégrée dans le film flexible du diffuseur, ou par un offset. La teinture utilisée peut être un dégradé de couleur noire ou blanche. Cette teinture noire est par exemple de l'encre déposée par une machine d'impression. Dans le cas d'une couleur noire, la lumière passant à travers la zone à opacité partielle est partiellement absorbée donc perdue, alors qu'avec une couleur blanche, la lumière est partiellement réfléchie de manière diffuse et renvoyée dans la plaque guide de lumière pour réduire les pertes de photons utiles. Ces photons récupérés peuvent être aiguillés vers d'autres zones moins lumineuses de la plaque guide de lumière 7.

En lieu et place d'une teinture, la zone à opacité partielle 10' peut également être obtenue par un revêtement métallique semi-transparent d'épaisseur variable, ou par un revêtement métallique percé d'une multitude de trous de diamètre et espacement variables en fonction de la résolution de l'oeil humain, ou par un revêtement métallique constitué d'une multitude de points métalliques de diamètre et espacement variables, qui sont obtenus à travers un chablon percé de trous. Ce revêtement métallique peut être fait par un procédé de métallisation sous vide, et les trous du revêtement mince ou du chablon peuvent être percés par un faisceau laser ou un autre procédé photo-lithographique.

Bien entendu, la zone à opacité partielle peut être réalisée sur une autre couche que le film diffuseur. Cette zone peut être réalisée directement sur la face avant de la plaque guide de lumière, sur le film redresseur 11 ou sur la face arrière de l'élément d'affichage. Dans le cas d'une zone sur la plaque guide de lumière, il serait préférable d'opter pour une teinture de couleur blanche en dégradé depuis une limite correspondant à la ligne de bordure de la partie visible de l'élément d'affichage du côté de la source de lumière. Avec cette couleur blanche déposée directement sur la plaque guide de lumière, la lumière est partiellement réfléchie de manière diffuse et permet ainsi de récupérer des photons utiles comme expliqué ci-dessus.

Comme le dispositif de rétro-éclairage doit pouvoir être aisément manipulé dans des opérations de montage dans un boîtier d'une montre-bracelet, tous les éléments qui le composent doivent être assemblés au préalable. Pour ce faire en se reportant à la figure 1, l'entretoise en forme de cadre 12 comprend tout d'abord un premier rebord intérieur 13 ayant deux doigts flexibles 15 disposés sur des parois latérales du premier rebord 13. Le réflecteur 6 et la plaque guide de lumière 7 sont maintenus entre une face d'appui du premier rebord et les deux doigts flexibles 15.

L'entretoise comprend encore un second rebord intérieur 14 au-dessus du premier rebord 13 dans le cas où il est prévu de monter un film diffuseur 9 et/ou un film redresseur 11. Le film diffuseur 9 est tout d'abord placé en appui sur le second rebord et est maintenu grâce à une languette 20 insérée dans un logement 16 d'une paroi latérale du second rebord. Le film redresseur 11 est ensuite placé en appui sur le film diffuseur 9 et est maintenu comme pour le film diffuseur grâce à une languette 21 également insérée dans le logement 16. De cette façon, tous les élément de transmission ou réflexion de la lumière sont maintenus dans l'entretoise qui elle-même est assemblée à la plaque à circuit imprimé sur lequel est fixé la diode électroluminescente 2.

Le réflecteur 6, la plaque guide de lumière 7, le film diffuseur 9 et le film redresseur 11 ont chacun une surface supérieure ou égale à la surface de la partie visible de l'élément d'affichage.

On peut encore remarquer sur la figure 1, que le film diffuseur sur lequel la zone à opacité décroissante a été réalisée, comprend une partie du film diffuseur qui est placée sur le coin arrondi 8. Cette partie du film diffuseur est revêtue d'une couche 10 de couleur noire entièrement opaque qui s'étend jusqu'à la limite du début de la zone à opacité décroissante.

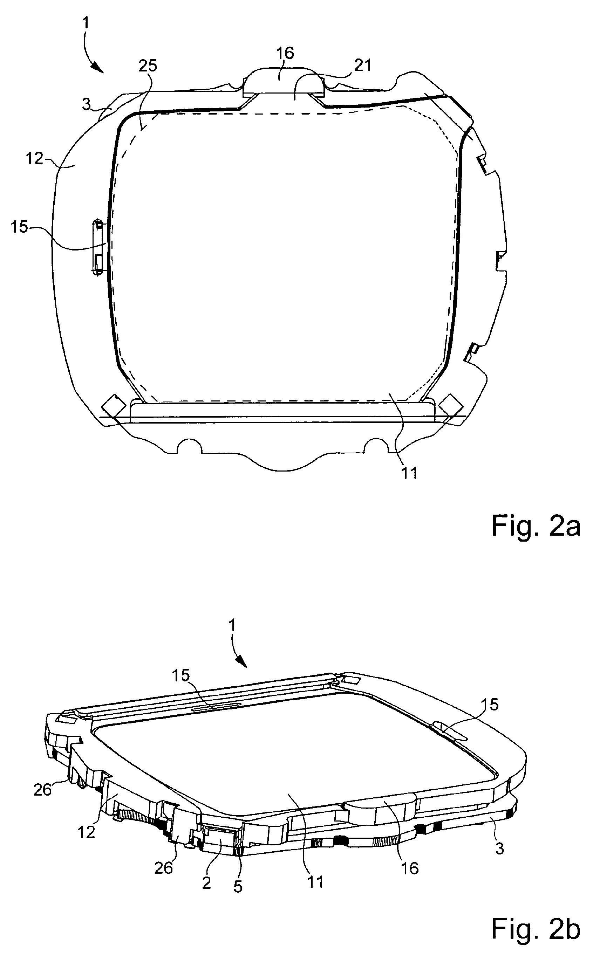

Pour mieux se rendre compte de la forme du dispositif de rétro-éclairage avec tous ces éléments assemblés, on peut se reporter aux figures 2a et 2b. On s'abstiendra de décrire tous les éléments composant ledit dispositif dans ces figures 2a et 2b étant donné qu'ils ont déjà été décrits ci-devant notamment en référence à la figure 1.

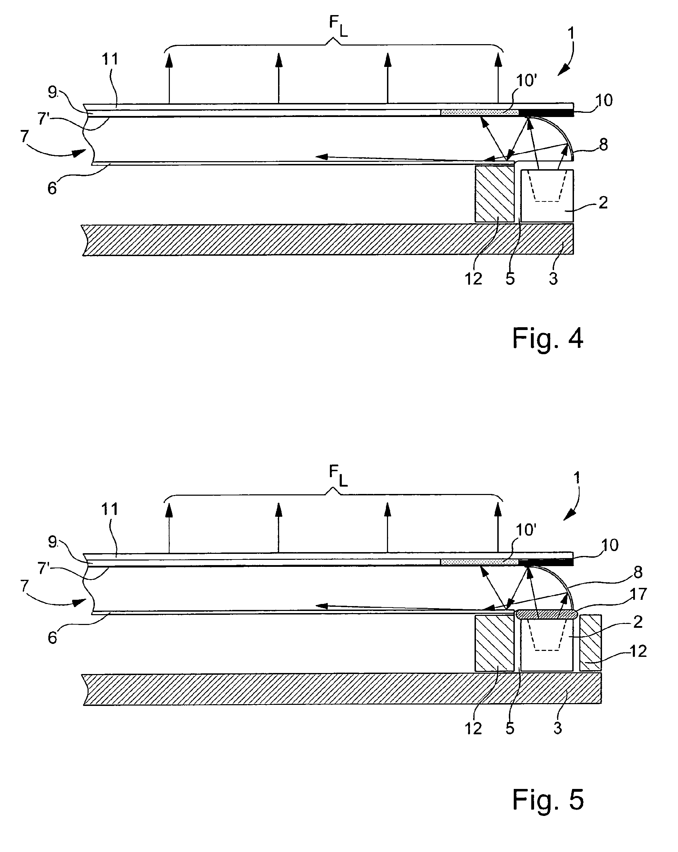

Deux variantes de réalisation du dispositif de rétro-éclairage sont encore expliqués en référence aux figures 4 et 5. Bien entendu, les mêmes éléments expliqués ci-dessus portent des signes de référence identiques, et ne seront expliqués que de manière simplifiée.

Le dispositif de rétro-éclairage montré partiellement en coupe comprend la plaque à circuit imprimé 3, la diode électroluminescente 2 fixée sur la plaque à circuit imprimé, l'entretoise 12 avec le compartiment 5 de la diode 2, le réflecteur 6, la plaque guide de lumière 7, le film diffuseur 9 et finalement le film redresseur 11.

Comme montré à la figure 4, la diode électroluminescente 2 est placée à courte distance de la face arrière de la plaque guide de lumière directement sous le coin arrondi. Un espace d'air sépare donc la face supérieure de la diode 2 du coin arrondi 8. Un bord du réflecteur 6 arrive à fleur d'un bord supérieur du compartiment. De préférence le bord du réflecteur pourrait être directement au bord de la sortie de lumière de la diode électroluminescente afin de ne pas perdre de la lumière réfléchie par le coin arrondi.

Grâce à la zone à opacité partielle 10' qui décroît plus la distance à la diode augmente, la lumière F_{L} redirigée et orientée par tous les éléments de transmission et réflexion de la lumière a une intensité sensiblement égale en tout point de manière à illuminer de manière homogène l'élément d'affichage.

Dans une variante de réalisation montrée à la figure 5, il est prévu un joint en matériau silicone 17 pour relier la partie supérieure de la diode électroluminescente 2 à une surface inférieure du coin arrondi de la plaque à circuit imprimé. De préférence, le joint a un indice de réfraction intermédiaire entre l'indice de réfraction du matériau transparent de la diode électroluminescente et l'indice de réfraction de la plaque guide de lumière.

Bien entendu, il aurait pu être imaginé également de placer la diode dans un même plan que la plaque guide de lumière afin qu'elle fournisse des rayons lumineux par une bordure de la plaque guide de lumière dans une direction horizontale. Dans ce cas, la plaque guide de lumière ne comprend plus de coin arrondi.

A partir de la description qui vient d'être faite de multiples variantes de réalisation du dispositif de rétro-éclairage peuvent être conçues par l'homme du métier sans sortir du cadre de l'invention définie par les revendications. Il peut être prévu une ou plusieurs autres zones à opacité partielle sur la couche dans le cas où il est souhaité atténuer volontairement l'intensité de lumière pour donner des effets particuliers à travers l'élément d'affichage. Il peut être prévu de n'utiliser pour le dispositif que le réflecteur avec la plaque guide de lumière sur laquelle une ou plusieurs zones à opacité partielle sont réalisées pour limiter les coûts de production. Le réflecteur et la plaque peuvent ne former qu'un seul élément.

## Revendications

1. Dispositif de rétro-éclairage (1) d'un élément d'affichage d'information d'un objet portable, tel qu'une montre-bracelet, le dispositif comprenant une plaque guide de lumière (7) ayant une face avant et une face arrière, un réflecteur de lumière (6) placé sur la face arrière de la plaque guide de lumière, et une source de lumière visible (2) fournissant en bordure de la plaque guide de lumière des rayons lumineux, qui se propagent dans la plaque guide de lumière entre ses deux faces, **caractérisé en ce qu'**il comprend une couche placée entre la face avant de la plaque guide de lumière et une face arrière de l'élément d'affichage de l'objet portable, cette couche ayant au moins une zone (10') à opacité partielle décroissante à partir d'une limite (25) située à proximité de l'endroit de la bordure de la plaque guide de lumière recevant les rayons lumineux de la source de lumière, afin d'atténuer l'intensité de la lumière traversant ladite zone.

2. Dispositif de rétro-éclairage (1) selon la revendication 1, **caractérisé en ce que** la zone à opacité partielle, qui décroît de manière non linéaire à partir de la limite à proximité de la bordure de la plaque guide de lumière, est obtenue par une teinture (10') déposée ou intégrée dans la couche, ou par un revêtement métallique semi-transparent d'épaisseur variable, ou par un revêtement métallique percé d'une multitude de trous de diamètre et espacement variables qui sont de taille inférieure à la résolution de l'oeil humain, ou par un revêtement métallique constitué d'une multitude de points métalliques de diamètre et espacement variables.

3. Dispositif de rétro-éclairage (1) selon la revendication 2, **caractérisé en ce que** la couche à zone à opacité partielle (10') fait partie intégrante de la face avant de la plaque guide de lumière (7) ou d'un film polariseur de l'élément d'affichage.

4. Dispositif de rétro-éclairage (1) selon la revendication 2, **caractérisé en ce que** la couche à zone à opacité partielle (10') est un film diffuseur (9) ou un film redresseur (11) de la lumière placé sur la face avant de la plaque guide de lumière.

5. Dispositif de rétro-éclairage (1) selon la revendication 2, **caractérisé en ce que** la zone à opacité partielle décroissante est obtenue par une teinture en dégradé de couleur noire ou blanche ou argentée, qui s'étend de la limite (25), qui correspond à une ligne de bordure de la partie visible de l'élément d'affichage, à une distance déterminée par rapport à la position de la source de lumière (2).

6. Dispositif de rétro-éclairage (1) selon l'une des revendications précédentes, **caractérisé en ce qu'**il comprend une unique source de lumière, telle qu'une diode électroluminescente pour illuminer par l'arrière l'élément d'affichage.

7. Dispositif de rétro-éclairage (1) selon l'une des revendications précédentes, **caractérisé en ce qu'**il comprend une entretoise (12) formant un cadre dans laquelle sont maintenus le réflecteur (6), la plaque guide de lumière et le diffuseur, et **en ce qu'**un compartiment (5) est pratiqué en périphérie de l'entretoise pour loger la source de lumière, telle qu'une diode électroluminescente (2) fixée sur une plaque à circuit imprimé (3), l'entretoise étant montée de manière amovible et positionnée par des moyens d'assemblage (26) sur la plaque à circuit imprimé.

8. Dispositif de rétro-éclairage (1) selon la revendication 7, **caractérisé en ce que** l'entretoise (12) comprend deux doigts flexibles (15) disposés sur des faces latérales d'un premier rebord intérieur (13) pour maintenir le réflecteur (6) et la plaque guide de lumière (7) insérés entre une face d'appui du premier rebord et chaque doigt flexible.

9. Dispositif de rétro-éclairage (1) selon la revendication 8, **caractérisé en ce que** l'entretoise comprend en dessus des doigts flexibles (15) un second rebord intérieur (14) pour recevoir un film diffuseur flexible (9), qui est maintenu à l'aide d'une languette (20) insérée dans un logement (16) pratiqué dans une face latérale du second rebord de l'entretoise, et **en ce qu'**un film flexible transparent redresseur de lumière (11) est placé sur le film diffuseur et maintenu par une autre languette (21) dans le logement (16) du second rebord.

10. Dispositif de rétro-éclairage (1) selon l'une des revendications précédentes, **caractérisé en ce que** la plaque guide de lumière (7) comprend à sa périphérie un coin arrondi (8) recouvert par une couche (8') de réflexion de la lumière, et une structure de lentilles (7') de taille nano-métrique sur une partie de sa face avant ou arrière, et **en ce que** la source de lumière, telle que la diode électroluminescente (2), est disposée sous le coin arrondi afin de fournir des rayons lumineux dans une direction verticale afin que lesdits rayons soient réfléchis par la couche de réflexion en bordure de la plaque guide de lumière, et se propagent dans la plaque guide de lumière entre les faces avant et arrière.

11. Dispositif de rétro-éclairage (1) selon la revendication 10, **caractérisé en ce qu'**une partie du film diffuseur (9) est placée sur le coin arrondi (8), **en ce que** la partie du film diffuseur est revêtue d'une couche (10) de couleur noire entièrement opaque qui s'étend jusqu'à la limite du début de la zone à opacité décroissante, et **en ce que** le coin arrondi est recouvert d'une couche de couleur blanche opaque ou d'un revêtement métallique.

12. Dispositif de rétro-éclairage (1) selon l'une des revendications 7 à 11 **caractérisé en ce que** la diode électroluminescente (2) est logée dans le compartiment de l'entretoise, qui est composé de parois latérales entourant partiellement ou complètement ladite diode depuis une surface supérieure de la plaque à circuit imprimé (3), et **en ce qu'**un bord du réflecteur arrive à fleur d'un bord supérieur du compartiment.

13. Dispositif de rétro-éclairage (1) selon l'une des revendications 7 à 12, **caractérisé en ce qu'**un joint en matériau silicone (17) relie la partie supérieure de la diode électroluminescente (2) à une surface inférieure du coin arrondi de la plaque à circuit imprimé, le joint ayant un indice de réfraction intermédiaire entre l'indice de réfraction du matériau transparent de la diode électroluminescente et l'indice de réfraction de la plaque guide de lumière (7).

14. Dispositif de rétro-éclairage (1) selon la revendication 1, **caractérisé en ce que** la plaque guide de lumière (7), le réflecteur (6) et la couche à zone à opacité partielle forment un seul élément.
